Europäisches Patentamt

European Patent Office

Office européen des brevets

(19)

(11) **EP 1 235 399 B1**

(12) **FASCICULE DE BREVET EUROPEEN**

(45) Date de publication et mention
de la délivrance du brevet:
**03.11.2004 Bulletin 2004/45**

(51) Int Cl.$^7$: **H04L 25/02**, H04B 1/707

(21) Numéro de dépôt: **02290443.7**

(22) Date de dépôt: **22.02.2002**

(54) **Procédé et dispositif d'estimation de la matrice de covariance du canal de transmission d'un système UMTS**

Verfahren und Vorrichtung zur Schätzung der Kovarianzmatrix des Übertragungskanals eines UMTS-Systems

Method and apparatus to estimate the covariance matrix of the transmission channel of a UMTS system

(84) Etats contractants désignés:
**AT BE CH CY DE DK ES FI FR GB GR IE IT LI LU MC NL PT SE TR**

(30) Priorité: **27.02.2001 FR 0102653**

(43) Date de publication de la demande:
**28.08.2002 Bulletin 2002/35**

(73) Titulaire: **Thales**
**75008 Paris (FR)**

(72) Inventeurs:
• **Chevalier, Pascal, THALES Intell. Prop.**
**94117 Arcueil C-dex (FR)**
• **Chaufray, Jean-Marie, c/o THALES Intell. Prop.**
**94117 Arcueil C-dex (FR)**
• **Loubaton, Philippe, c/o THALES Intell. Prop.**
**94117 Arcueil C-dex (FR)**

(74) Mandataire: **Dudouit, Isabelle**
**THALES Intellectual Property,**
**31-33 avenue Aristide Briand**
**94117 Arcueil Cedex (FR)**

(56) Documents cités:
• **DESMEZIERES A ET AL: "Polarization in space-time processing for propagation channel identification" PROCEEDINGS OF 1999 2ND WORKSHOP ON SIGNAL PROCESSING ADVANCES IN WIRELESS, 9 - 12 mai 1999, pages 395-398, XP002178929 IEEE, Piscataway, NJ, USA ISBN: 0-7803-5599-7**

• **CHENU-TOURNIER M ET AL: "A parametric spatio-temporal channel estimation technique for FDD UMTS uplink" PROCEEDINGS OF THE 2000 IEEE SENSOR ARRAY AND MULTICHANNEL SIGNAL PROCESSING WORKSHOP, 16 - 17 mars 2000, pages 12-16, XP002179594 IEEE, Piscataway, NJ, USA ISBN: 0-7803-6339-6**
• **CHAUFRAY J -M ET AL: "Consistent estimation of Rayleigh fading channel second-order statistics in the context of the wideband CDMA mode of the UMTS" IEEE TRANSACTIONS ON SIGNAL PROCESSING, vol. 49, no. 12, décembre 2001 (2001-12), pages 3055-3064, XP002200959 IEEE, USA ISSN: 1053-587X**
• **GAZZAH H ET AL: "A blind identification algorithm robust to order over estimation" 2000 IEEE INTERNATIONAL CONFERENCE ON ACOUSTICS, SPEECH, AND SIGNAL PROCESSING., 5 - 9 juin 2000, pages 2717-2720 vol.5, XP002179595 IEEE, Piscataway, NJ, USA ISBN: 0-7803-6293-4**
• **TONG L ET AL: "MULTICHANNEL BLIND IDENTIFICATION: FROM SUBSPACE TO MAXIMUM LIKELIHOOD METHODS" PROCEEDINGS OF THE IEEE, vol. 86, no. 10, octobre 1998 (1998-10), pages 1951-1968, XP000859736 IEEE, NEW YORK, USA ISSN: 0018-9219**

## Description

La présente invention concerne un procédé d'estimation d'un canal de propagation à partir de ses statistiques.

Elle trouve son application, dans les réseaux de téléphonie mobile de troisième génération communément appelée UMTS.

Elle peut aussi s'appliquer aux récepteurs multi-capteurs pour des fonctions de métrologie, d'augmentation de capacité ou encore de radio-surveillance.

Dans un système de transmission, notamment par ondes radio, un émetteur émet un signal dans un canal de transmission à destination d'un récepteur. Le signal émis subit des fluctuations d'amplitude et de phase dans le canal de transmission, le signal reçu par le récepteur est constitué de copies temporellement décalées et modifiées du signal émis. Les fluctuations du signal et les décalages génèrent ce que l'Homme du métier appelle l'interférence intersymbole. L'interférence provient notamment de la loi de modulation employée pour la transmission et également de la propagation de multi-trajets dans le canal.

Le signal reçu est généralement issu d'un grand nombre de réflexions dans le canal, les différents trajets empruntés par le signal émis conduisant à des retards variés au niveau des récepteurs. Ainsi la réponse impulsionnelle du canal représente l'ensemble des fluctuations auxquelles est soumis le signal émis.

L'apparition prochaine des réseaux UMTS contraint les équipementiers à adapter les outils de métrologie d'augmentation de capacité ou de radio surveillance à ce nouveau standard. Les performances de ces outils reposent en partie sur une estimation de l'effet engendré par le milieu de propagation (le canal radio) sur les signaux émis par les différentes entités du réseau (station de base, mobile,...). Cette opération est appelée estimation du canal de propagation. Elle permet notamment de contrecarrer l'effet de la propagation pour améliorer la qualité du signal reçu (égalisation) ou de faire ressortir des informations concernant le milieu de propagation (directions d'arrivée, retards des trajets) afin de mettre en oeuvre des traitements spatiaux, tels que la goniométrie.

## Modélisation

Signal émis

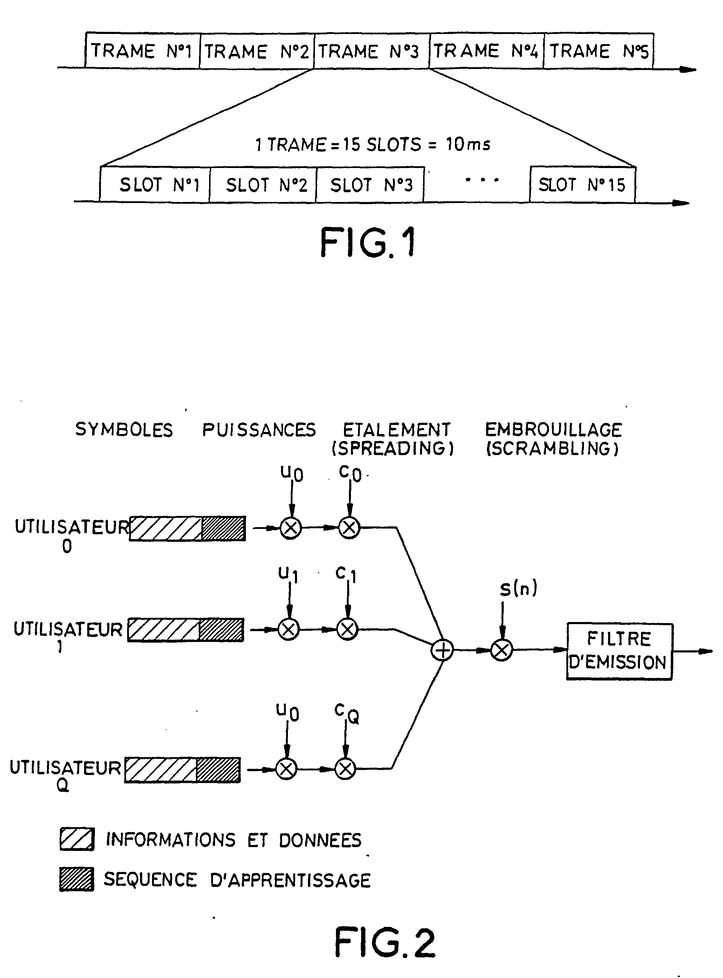

La composition du signal UMTS émis par une station de base vers les mobiles (liaison descendante) peut être modélisée par exemple selon le schéma donné à la figure 1.

Le signal s(t) est constitué de plusieurs trames, chaque trame de durée fixée comportant un nombre donné de slots. Par exemple une trame de 10 ms comporte 15 slots.

La figure 2 schématise un modulateur pour la liaison descendante (station de base vers les mobiles).

Les symboles Q-PSK (Quadrature Phase Shift keying en anglo-saxon), notés $b_q(0)$, ..., $b_q(Ns-1)$ destinés à un utilisateur q sont d'abord multipliés par un facteur de puissance $\mu_q$, avec Ns le nombre de symboles envoyés à cet utilisateur. Chaque symbole est ensuite modulé par une séquence, appelée séquence d'étalement (désignée par le terme anglo-saxon spreading), notée $c_q$ de $\pm 1$, et de taille $N_q$ (facteur d'étalement). Ainsi, on forme à partir du symbole $b_q(l)$ la suite $\mu_q b_q(l) c_q(0)$, ..., $\mu_q b_q(l) c_q(N_q-1)$, l étant l'indice du symbole.

Les séquences cq sont orthogonales, de sorte que :

$$\sum_{n=0}^{\min(N_q,N_p)} c_q(n)c_p(n) = N_q \quad \text{si } p = q$$

$$= 0 \quad \text{sinon}$$

Les suites ainsi formées sont alors multipliées terme à terme par une suite de symboles, ($\pm 1 \pm i$), appelée code d'embrouillage s (scrambling). Cette suite est périodique, de période trame, et est construite de façon à simuler un signal aléatoire. Le signal résultant à émettre s'écrit donc :

$$y(n) = \sum_{q=0}^{Q} \mu_q b_q \left( \left\lfloor \frac{n}{N_q} \right\rfloor \right) c_q (n[N_q]) s(n)$$

avec s(n) embrouillage ou scrambling à un instant n donné

où $\lfloor \; \rfloor$ désigne l'opérateur « partie entière » et ] l'opérateur « modulo ». Ceci peut encore s'écrire :

$$y(n) = \sum_{q=0}^{Q} \mu_q d_q(n) \qquad (1)$$

avec :

$$d_q(n) = b_q(\left\lfloor \frac{n}{N_q} \right\rfloor) c_q(n \left[ N_q \right]) s(n) \qquad (2)$$

Ce signal passe à travers un filtre d'émission puis est diffusé par la station de base à l'attention des mobiles.

Signal reçu par un mobile

Le signal est reçu sur un réseau de capteurs après avoir traversé le canal radio. Après échantillonnage, il peut se mettre sous la forme :

$$\mathbf{x}(n) = \sum_{k=0}^{L-1} y(n-k)\mathbf{h}(k) + \mathbf{b}(n) \qquad (3)$$

*   où les caractères en gras désignent des vecteurs, et

*   L correspond à l'étalement du canal exprimé en nombre de chips, les indices n et k à des chips.

*   $\mathbf{x}(n)$ représente :

    •   lorsque l'on échantillonne au rythme chip, $\mathbf{x}(n)$ est le vecteur des signaux reçus à l'instant n sur chaque capteur,

    •   lorsque l'on suréchantillonne à un rythme correspondant à un chip/2, x(n) est le vecteur des signaux reçus aux instants n et n+chip/2.

*   $\mathbf{h}(k)$ est le canal multi-capteurs, et

*   $\mathbf{b}(n)$ est un bruit additif regroupant les interférences provenant des autres stations de base et le bruit thermique.

Signal reçu par une station

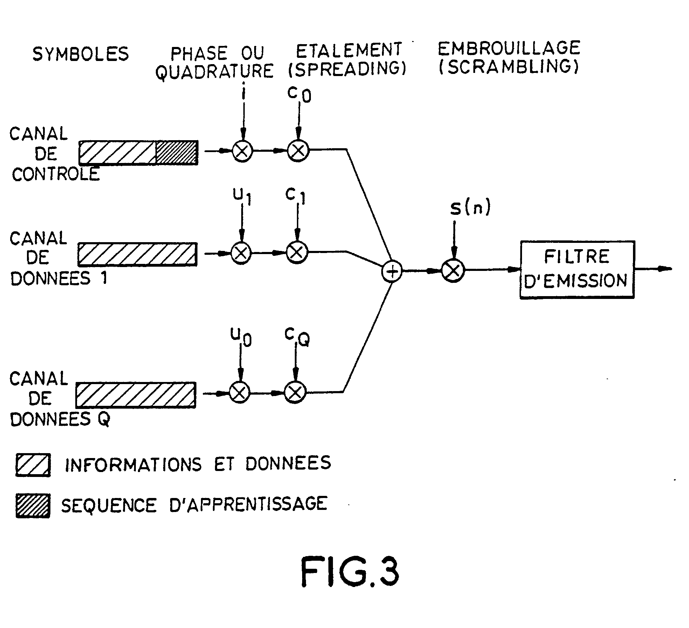

La figure 3 schématise une possibilité de modéliser la liaison montante (mobiles vers une station de base) détaillée après dans le cadre du procédé selon l'invention.

**Méthodes connues**

De nombreuses méthodes sont connues pour estimer la réponse d'un canal de propagation.
Par exemple, une méthode classique procède par corrélation du signal reçu, avec des versions décalées d'une séquence d'apprentissage connue du récepteur, dont seules les étapes nécessaires à la compréhension de l'invention sont rappelées ci-après.
Pour l'utilisateur 0, par exemple, l'estimation de la réponse impulsionnelle du canal est faite, classiquement, en corrélant plusieurs versions décalées du signal reçu x(n+k) (une version étant décalée de l'échantillon k), par la séquence d'apprentissage :

$$\hat{\mathbf{h}}(k) = \frac{1}{N_0 P} \sum_{n=0}^{N_0 P} s(n)^* c_0 \left( n \left[ N_0 \right] \right) b_0 \left( \left\lfloor \frac{n}{N_0} \right\rfloor \right)^* \mathbf{x}(n+k) \qquad (4)$$

où P représente le nombre de symboles d'apprentissage, et

$N_0 P$ le nombre de chips d'apprentissage, ou nombre de chips pilote

En regroupant les équations (1), (2), (3) et (4), l'expression du canal estimé détaillée correspond à (5) :

$$\hat{\mathbf{h}}(k) = \sum_{l=0}^{L} \mathbf{h}(l) \frac{1}{N_0 P} \sum_{n=0}^{N_0 P - 1} d_0(n+k-l) d_0^*(n)$$

$$+ \sum_{q=1}^{Q} \mu_q \sum_{l=0}^{L} \mathbf{h}(l) \frac{1}{N_0 P} \sum_{n=0}^{N_0 P - 1} d_q(n+k-l) d_0^*(n)$$

$$+ \frac{1}{N_0 P} \sum_{n=0}^{N_0 P - 1} \mathbf{b}(n+k) d_0^*(n)$$

Les propriétés des séquences $d_q(n)$ font que (6) :

$$\frac{1}{N_0 P} \sum_{n=0}^{N_0 P - 1} d_0(n+k-l) d_0^*(n) = 1 \quad \text{si } k = l$$

$$\approx \frac{1}{\sqrt{N_0 P}} \quad \text{sinon}$$

$$\frac{1}{N_0 P} \sum_{n=0}^{N_0 P - 1} d_q(n+k-l) d_0^*(n) \approx \frac{1}{\sqrt{N_0 P}}$$

Ainsi, l'estimée de la réponse impulsionnelle du canal s'exprime en fonction notamment de la réponse du canal **h** (k) et de trois termes représentatifs des interférences existantes (7) :

$$\hat{\mathbf{h}}(k) = \mathbf{h}(k)$$

$$+ \sum_{l=0, l \neq k}^{L} \mathbf{h}(l) \frac{1}{N_0 P} \sum_{n=0}^{N_0 P - 1} d_0(n+k-l) d_0^*(n)$$

$$+ \sum_{q=1}^{Q} \mu_q \sum_{l=0}^{L} \mathbf{h}(l) \frac{1}{N_0 P} \sum_{n=0}^{N_0 P - 1} d_q(n+k-l) d_0^*(n)$$

$$+ \frac{1}{N_0 P} \sum_{n=0}^{N_0 P - 1} \mathbf{b}(n+k) d_0^*(n)$$

- où Q est le nombre d'utilisateurs du canal de propagation,

- I, k des indices correspondant à des chips, et

- n l'indice de l'instant considéré

Trois types d'interférences venant perturber l'estimation sont ainsi identifiées :

- le premier terme correspond aux auto-corrélations de la séquence $d_0$,

- le deuxième terme à l'interférence des autres utilisateurs, et

- le troisième terme représente la contribution du bruit extérieur et thermique.

Cette technique est performante lorsque la séquence d'apprentissage est longue et lorsque le canal de propagation n'évolue pas ou peu au cours du temps. Dans le cas d'une variation rapide du canal de propagation, il devient nécessaire de l'estimer sur des durées assez courtes.

Une autre technique connue sous la désignation « technique des moindres carrés » permet d'améliorer la méthode précédente en s'affranchissant des auto-corrélations de la séquence d'apprentissage.

Le brevet FR 2 762 164 divulgue un procédé pour estimer la réponse impulsionnelle d'un canal de transmission, qui utilise l'estimation de la matrice de covariance spatio temporelle r de la réponse impulsionnelle du canal. Le procédé considère que le bruit d'estimation est blanc, de puissance B et indépendant du canal. Dans ce cas, la matrice $\Gamma$ est estimée par $\Gamma = \Delta - BI$ avec $\Delta$ la matrice de covariance spatio temporelle du canal estimé. Si B est inconnu, il peut être estimé par la plus petite valeur propre de la matrice $\Delta$ estimée, il peut aussi être fixé à une valeur seuil. Une telle hypothèse convient parfaitement à un système, où un canal de propagation est dédié à un utilisateur, par exemple le système GSM. D'autre part, la technique proposée concerne les récepteurs mono-capteurs.

Par contre une telle méthode ne convient plus pour des signaux incluant plusieurs utilisateurs, tel que l'UMTS, où le bruit n'est ni blanc, ni indépendant du canal, notamment en raison de l'interférence multi-utilisateurs.

Le document intitulé « A parametric spatio-temporel channel estimation technique for FDD UMTS uplink » de Chenu-Tournier et al, publié au proceedings of the 2000 IEEE Sensor aray and Multichannel signal processing workshop, 16-17 mars 2000, pages 12-16, XP0021179594 IEEE, Piscataway, NJ, USA, et le document de Mesmezieres et al intitulé « Polarization in space-time processing for propagation channel identification », proceedings of 1999 2[ND] workshop on signal processeing advances in wireless, 9-12 mai 1999, pages 395-398, IEEE, Piscataway, NJ, USA décrivent des techniques autodidactes ou aveugles d'estimation de canal, à partir de multi-capteurs. Ces techniques permettent notamment d'estimer une réponse impulsionnelle multicapteurs.

L'objet de la présente invention concerne un procédé pour estimer un canal de propagation à partir de ses statistiques, elles-mêmes estimées en exprimant notamment le bruit à partir de la matrice de corrélation empirique des observations.

L'invention concerne un procédé pour estimer la réponse impulsionnelle h d'un canal de propagation dans un système comportant au moins un ou plusieurs capteurs comportant au moins une étape d'estimation des statistiques du bruit additif résultant des interférences et du bruit thermique à partir des statistiques du signal reçu. Il est caractérisé en ce que l'étape d'estimation de la matrice de covariance du bruit est par exemple réalisée à partir de la matrice de covariance empirique des observations Rx et du nombre de chips pilotes $N_{0P}$ d'une séquence d'apprentissage transmise avec le signal, la matrice de covariance du bruit s'exprimant sous la forme

$$\frac{1}{N_0 P}\hat{R}_x$$

où P représente le nombre de symboles d'apprentissage

Le procédé est par exemple utilisé pour estimer la réponse impulsionnelle d'un canal de propagation dans le domaine de l'UMTS pour des liaisons montantes et/ou des liaisons descendantes entre une station de base et un ou plusieurs mobiles.

L'invention concerne aussi un dispositif de réception adapté pour estimer la réponse impulsionnelle d'un canal de propagation comportant un ou plusieurs capteurs de réception d'un signal, un moyen pour échantillonner le signal reçu, un moyen adapté à estimer le bruit à partir des statistiques du canal.

Le récepteur selon l'invention peut comporter un moyen adapté à estimer le bruit à partir de la matrice de covariance empirique des observations $\mathbf{R_x}$ et du nombre de chips pilote $\mathbf{N_0 P}$ d'une séquence d'apprentissage transmise avec le signal, la matrice de covariance du bruit s'exprimant sous la forme

$$\frac{1}{N_0 P}\hat{R}_x$$

où P représente le nombre de symboles d'apprentissage

Selon une variante de réalisation il comporte par exemple un moyen adapté à déterminer la réponse impulsionnelle du canal sous la forme

$$\tilde{\mathbf{H}}_{\mathrm{m}} =[\ \ \frac{1}{\mathrm{M}}\sum_{m=1}^{M}\hat{\mathbf{H}}_{m}\hat{\mathbf{H}}_{m}^{H}-\ \ \frac{1}{N_0 P}\hat{\mathbf{R}}_{\mathbf{x}}\,]\Delta^{-1}\hat{\mathbf{H}}_{m}$$

avec représente la matrice de covariance du canal estimé : $\Delta= E[\hat{\mathbf{H}}_{m},\hat{\mathbf{H}}_{m}^{H}]$

$\hat{\mathbf{H}}_{m}$ l'estimée du canal pour le slot m,

M le nombre de slots observés pour l'estimation du canal,

P représente le nombre de symboles d'apprentissage, et

$N_0 P$ le nombre de chips d'apprentissage, ou nombre de chips pilote.

Le récepteur est utilisé dans le domaine de l'UMTS.

L'invention présente notamment comme avantage d'estimer un canal de propagation comportant plusieurs utilisateurs, pour lequel le bruit n'est ni blanc, ni indépendant.

D'autres avantages et caractéristiques de l'invention apparaîtront mieux à la lecture de la description qui suit où sont proposés des exemples de mise en oeuvre à titre illustratif, ceci en référence aux figures annexées qui représentent :

- La figure 1, la composition du signal UMTS,
- La figure 2 la modélisation du signal pour une liaison descendante,
- La figure 3, un schéma de principe d'une première variante de mise en oeuvre de l'invention,
- La figure 4, un exemple de signal pour la liaison montante (entre une station mobile et une station de base),
- La figure 5, une deuxième variante de mise en oeuvre de l'invention,
- La figure 6 des résultats comparatifs obtenus en utilisant différents procédés d'estimation.

Afin de mieux faire comprendre l'objet de la présente invention, la description qui suit donnée à titre illustratif et nullement limitatif est appliquée dans le domaine de l'UMTS, pour estimer un canal de propagation notamment à partir de ses statistiques.

Sous le terme « statistique », on désigne par exemple la covariance spatio temporelle de la réponse impulsionnelle du canal.

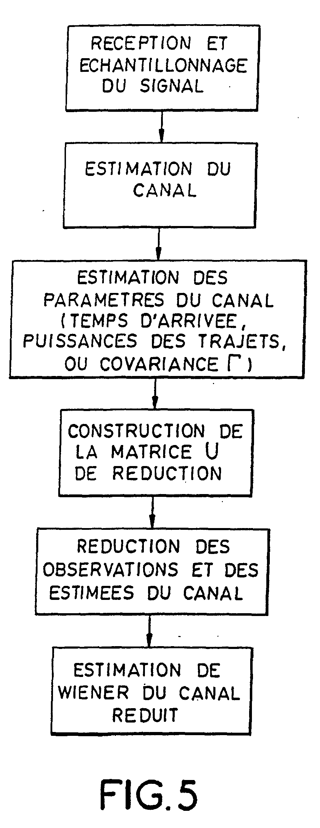

Ce système fait appel à des signaux tels que décrits respectivement à la figure 1 pour une liaison descendante, c'est-à-dire le signal émis de la station de base vers des mobiles, et à la figure 5 pour une liaison montante correspondant à un signal émis d'un mobile vers la station de base.

En appliquant au canal de propagation un modèle statistique réaliste, reposant sur l'hypothèse que le canal de propagation est assimilable à un filtre à réponse impulsionnelle finie, il est possible d'améliorer les techniques d'estimation du canal existantes, en tenant compte de ses statistiques.

**Modélisation du canal radio**

Le canal radio peut être modélisé comme une somme de trajets, chacun étant caractérisé par un temps d'arrivée, une atténuation et un déphasage. La modélisation considérée dans le cadre de l'invention utilise comme hypothèse que l'atténuation et le déphasage d'un trajet évoluent rapidement par rapport à l'évolution des temps d'arrivée des différents trajets. Le canal peut être alors représenté comme un processus aléatoire stationnaire, ce qui permet de dire que chaque réalisation du canal est régie par les mêmes statistiques (une réalisation désigne ici la valeur prise par le canal sur un slot donné i.e. $H_m$ ).

Ainsi, pour un slot donné d'indice m, où m varie de 1 à M, par exemple, le vecteur des coefficients des canaux échantillonnées correspondant à chaque capteur du récepteur est noté (8) :

$$H_m =[h_m (0)^H\ h_m (1)^H\ _{...}\ h_m (L)^H]^H$$

Où l'exposant H correspond à la transposée hermitienne, L au nombre d'échantillons, m l'indice du slot du signal reçu.

Nous supposons que $\mathbf{H}_m$ reste constant pendant toute la durée du slot, mais que pour m≠m', $\mathbf{H}_m$≠$\mathbf{H}_{m'}$.

De même, le canal est estimé à chaque slot m, et son estimée est notée $\hat{\mathbf{H}}_m$. On utilise par exemple la méthode des corrélations successives décalées connue de l'Homme du métier.

La réponse impulsionnelle du canal étant estimée pour l'ensemble des slots m du signal reçu, il est possible d'améliorer cette estimée $\hat{\mathbf{H}}_m$ , en mettant en oeuvre des méthodes connues de l'Homme du métier.

L'exemple de mise en oeuvre du procédé selon l'invention, donné à titre illustratif, fait appel à une estimation de Wiener, connue de l'Homme du métier et dont les principes ne seront pas détaillés. La méthode d'estimation de Wiener est par exemple décrite dans le livre intitulé "Fonctions Aléatoires" ayant pour auteurs A. Blanc-Lapierre, et B. Pichinbono, aux Editions Masson 1981. Toute autre méthode d'estimation permettant d'améliorer l'estimée du canal peut être utilisée sans sortir du cadre de l'invention.

**Estimation de Wiener du canal**

L'estimation de Wiener du canal consiste à améliorer l'estimée $\hat{\mathbf{H}}_m$ à l'aide d'une transformation linéaire de $\hat{\mathbf{H}}_m$ . Cette transformation est choisie de manière à minimiser l'erreur quadratique moyenne entre le vrai canal et l'estimée améliorée.

L'estimée améliorée de la réponse impulsionnelle du canal pour un slot m tient compte de la matrice de covariance du canal et de la matrice de covariance du canal estimé et s'écrit par exemple (9) :

$$\Gamma \Delta^{-1} \hat{\mathbf{H}}_m$$

où

$\Gamma$ représente la matrice de covariance du canal : $\Gamma = E[\mathbf{H}_m \mathbf{H}_m^{H}]$

avec $\mathbf{H}_m$ le vecteur défini dans l'expression (8) qui reste constant ou pratiquement constant sur la durée du slot, et

$\Delta$ représente la matrice de covariance du canal estimé : $\Delta = E[\hat{\mathbf{H}}_m\hat{\mathbf{H}}_m^{H}]$

L'idée de l'invention consiste notamment à estimer la covariance du bruit d'estimation afin de la retrancher de la matrice de covariance du canal $\Delta$ pour en déduire la matrice de covariance du canal $\Gamma$. A partir de ces deux valeurs il est alors possible d'en déduire l'estimée améliorée de la réponse impulsionnelle du canal de propagation.

Le bruit d'estimation correspond à la différence entre le canal estimé $\hat{\mathbf{H}}_m$ et le canal réel $\mathbf{H}_m$ . Ce bruit résulte notamment des interférences et des autres sources de bruit affectant le signal lors de la procédure d'estimation du canal.

Pour cela, le procédé utilise l'estimation des statistiques du canal comme il est décrit ci-après.

**Estimation de $\Delta$, matrice de covariance du canal estimé**

Cette matrice peut être estimée de manière connue de l'Homme du métier, en supposant avoir accumulé pendant un nombre M de slots des estimées du canal $\hat{\mathbf{H}}_m$ pour lesquels les temps d'arrivée n'ont pas ou peu évolué. A l'aide de ces estimées, m variant de 1 à M et, en utilisant un principe connu de l'Homme du métier (l'estimateur choisi est le meilleur non biaisé, par exemple), il est possible d'estimer la matrice $\Delta$ contenant les statistiques du second ordre de l'estimée du canal.

La matrice $\Delta$ est alors estimée par (10)

$$\hat{\Delta} = \frac{1}{M} \sum_{m=1}^{M} \hat{\mathbf{H}}_m \hat{\mathbf{H}}_m^{H}$$

Cet estimateur est consistant, dans la mesure où il converge vers la vraie matrice $\Delta$ lorsque le nombre d'observations tend vers l'infini.

**Estimation de la covariance $\Gamma$ du canal**

Elle s'exprime en tenant compte de la matrice estimée (10)

$$\hat{\Delta} = \frac{1}{M}\sum_{m=1}^{M}\hat{\mathbf{H}}_{m}\hat{\mathbf{H}}_{m}^{H}$$

et

de la matrice estimée de covariance du bruit (11) exprimée sous la forme

$$\frac{1}{N_0 P}\hat{\mathbf{R}}_{\mathbf{x}}$$

où $\hat{\mathbf{R}}_{\mathbf{x}}$ est la matrice de corrélation empirique des observations,

Soit L le nombre d'échantillons du canal à estimer et K le nombre de capteurs, la matrice $\mathbf{R}_{\mathbf{x}}$ est de taille KL*KL. On peut la considérer comme une matrice temporelle de taille L*L dont les éléments sont des matrices spatiales de taille K*K.

Sur la ième ligne et la jème colonne, (i et j variant de 1 à L) de la matrice temporelle, on estime la matrice spatiale (K*K) $\mathbf{R}_{\mathbf{x}ij}$ par la somme sur n des $x(n+i)x(n+j)^{H}$ ou de manière équivalente des $x(n+i)x(n)^{H}$ ou encore des $x(n)x(n+j-i)^{H}$.

La matrice de covariance du canal est estimée par (12) :

$$\Gamma = \frac{1}{M}\sum_{m=1}^{M}\hat{\mathbf{H}}_{m}\hat{\mathbf{H}}_{m}^{H} - \frac{1}{N_0 P}\hat{\mathbf{R}}_{\mathbf{x}}$$

$\mathbf{R}_{\mathbf{x}}$ étant un estimateur consistant de la matrice $\Gamma$, lorsque le nombre d'observations M tend vers l'infini, cette quantité converge vers $\Gamma$.

**Estimation de la réponse impulsionnelle du canal de propagation**

La réponse impulsionnelle du canal $\mathbf{H}_m$ est alors estimée à nouveau à partir de la matrice de covariance estimée (12), et de l'inverse de la matrice de covariance du canal estimé, en appliquant par exemple la méthode d'estimation de Wiener ou tout autre méthode permettant d'améliorer une estimée à l'aide de ses statistiques.

On connaît par exemple une première valeur d'estimée $\mathbf{H}_m$ pour le canal de propagation $\mathbf{H}_m$, par exemple celle qui a servi à estimer la covariance du canal estimé et on applique l'estimateur de Wiener, expression (9), pour en déduire la nouvelle valeur estimée $\tilde{\mathbf{H}}_m$ du canal de propagation $\mathbf{H}_m$ (13).

$$\tilde{\mathbf{H}}_{m} = [\frac{1}{M}\sum_{m=1}^{M}\hat{\mathbf{H}}_{m}\hat{\mathbf{H}}_{m}^{H} - \frac{1}{N_0 P}\hat{\mathbf{R}}_{\mathbf{x}}]\Delta^{-1}\hat{\mathbf{H}}_{m}$$

En résumé, les différentes étapes du procédé selon l'invention sont exposées à la figure 3 sous la forme d'un algorithme comportant les étapes suivantes :

• Réception et échantillonnage du signal multi-capteurs, (a)

• Stockage des vecteurs d'observation successifs par exemple dans une mémoire, (b)

• Estimation de la matrice $\hat{\mathbf{R}}_{\mathbf{x}}$, (c)

• Estimation du canal par corrélation du signal avec la séquence d'apprentissage, (d)

• Stockage des estimées successives $\hat{\mathbf{H}}_m$, du canal $\mathbf{H}_m$ , (e)

• Estimation de la matrice $\Delta$, (f)

- Estimation de la matrice $\Gamma$, à partir des estimées ( c) et (f), et en utilisant l'expression de l'estimée du bruit sous la forme $\frac{1}{N_0 P}\hat{\mathbf{R}}_\mathbf{x}$ , (g)

- Amélioration des estimées du canal en appliquant par exemple la méthode de Wiener aux estimées (e), (f) et (g).

Le calcul des estimées est réalisé par exemple au moyen d'un microprocesseur programmé en conséquence, ce dernier pouvant aussi être adapté pour exécuter les étapes du procédé selon l'invention.

Le microprocesseur peut être en liaison avec un dispositif de traitement utilisant les valeurs estimées du canal pour mettre en oeuvre une démodulation ou une goniométrie telles que rappelées très brièvement ci-après.

Le procédé décrit précédemment dans le cadre des liaisons descendantes s'applique aussi sans sortir du cadre de l'invention pour des liaisons montantes, i.e des liaisons d'une station mobile vers une station de base.

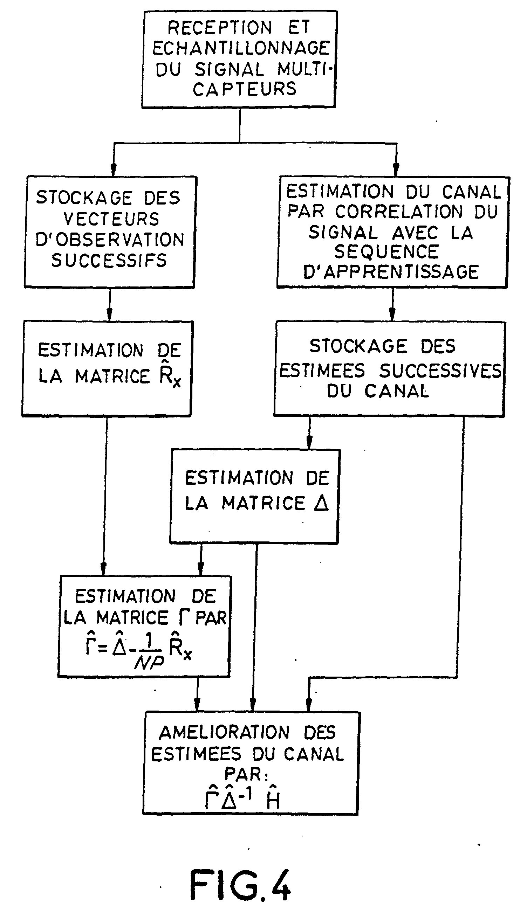

La figure 4 représente le schéma du démodulateur dans le cas de la liaison montante.

Le mobile émet un unique canal de contrôle, contenant une séquence d'apprentissage pour l'estimation du canal et des informations de signalisation, ainsi qu'un ou plusieurs canaux de données. Les canaux de données sont tous émis à la même puissance soit sur la voie « en phase », soit sur la voie « en quadrature ». Les symboles transmis sur chaque canal sont des symboles B-PSK ($\pm$1) (Binary Phase Shift Keying).

Il est possible d'adapter le modèle choisi pour la liaison descendante à la liaison montante en considérant le canal de contrôle comme l'utilisateur auquel on s'intéresse, et les canaux de données comme les autres utilisateurs de la cellule. Les autres mobiles émettant vers la même station de base sont traités de la même façon que les autres cellules pour la liaison descendante : ils sont inclus dans le bruit global.

Les étapes du procédé décrites dans le cadre de la liaison descendante s'appliquent avec ces hypothèses.

La figure 5 représente un exemple de mise en oeuvre d'étapes permettant une réduction de rang des matrices utilisées lors du procédé.

Par exemple les étapes se déroulent de la manière suivante :

- Réception et échantillonnage du signal, (a)
- Estimation du canal de propagation, (d,e)
- Estimation des paramètres du canal (temps d'arrivée, puissance des trajets,...)
- Construction de la matrice de réduction,
- Réduction des observations et des estimées du canal, en exécutant les étapes précédemment décrites ( c) (f) (g) dans le cas normal en utilisant la matrice de réduction,
- Estimation de Wiener du canal réduit

Il est possible d'améliorer à la fois l'efficacité et la complexité de ce procédé en recourant à la réduction de rang de l'espace-canal. Cette technique consiste à paramétrer l'espace-canal à l'aide d'une base orthonormale constituée d'un petit nombre de vecteurs.

En effet, généralement, dans le contexte d'une transmission par canal radio, en raison de la spécularité du canal (nombre de trajets dans le canal restreint), la matrice $\Gamma$ est dite « de rang déficient », ce qui signifie que les vecteurs $\mathbf{H_m}$ se déduisent d'une combinaison linéaire d'un petit nombre de vecteurs $\mathbf{u}_1$, ..., $\mathbf{u}_P$ formant une base de l'espace-canal. Si ces vecteurs étaient connus, il suffirait alors d'estimer la combinaison linéaire $g_{m,1}$, ..., $g_{m,P}$ permettant de reconstruire $\mathbf{H_m}$ par :

$$\mathbf{H}_m = \sum_{p=1}^{P} g_{m,p}\mathbf{u_p}$$

Regroupons $g_{m,1}$, ..., $g_{m,P}$ dans un vecteur $\mathbf{g}_m$ et $\mathbf{u}_1$, ..., $\mathbf{u}_P$ dans une matrice $\mathbf{U}$. On a alors :

$$H_m = Ug_m$$

Le vecteur $\mathbf{g}_m$ est de taille (beaucoup) plus petite que $\mathbf{H}_m$, il est donc plus simple de mettre en oeuvre l'estimateur de Wiener de $\mathbf{g}_m$ que de $\mathbf{H}_m$. On peut en effet estimer $\mathbf{g}_m$ par :

$$\hat{g}_m = U^H \hat{H}_m$$

Dès lors, on peut estimer les matrices de covariance $\Lambda$ et $\Xi$ de $\overset{\wedge}{\mathbf{g}}_m$ et de $\mathbf{\hat{U}}^H\mathbf{X}_m$, où $\mathbf{X}_m$ représente le vecteur des observations $[\mathbf{x}_m(0)^H,...,\mathbf{x}_m(L)^H]^H$ reçues au slot m. On peut alors estimer la matrice $\Omega$ de covariance de $\mathbf{g}_m$ :

$$\overset{\wedge}{\Omega} = \overset{\wedge}{\Lambda} - \frac{1}{NP}\overset{\wedge}{\Xi}$$

et

$$\widetilde{\mathbf{g}}_m = \mathbf{\hat{\Omega}}\mathbf{\hat{\Xi}}^{-1}\mathbf{\hat{g}}_m$$

Dont on déduit une nouvelle estimée du canal :

$$\widetilde{\mathbf{H}}_m = \mathbf{U}\widetilde{\mathbf{g}}_m$$

En pratique, les vecteurs $\mathbf{u}_1, ..., \mathbf{u}_P$ ne sont pas connus, mais on peut les estimer de plusieurs façons :

- Vecteurs propres associés aux plus grandes valeurs propres de la matrice r estimée. Cette technique doit être mise en oeuvre avec une méthode de détermination du nombre de vecteurs propres à retenir.
- Vecteurs canoniques associés aux plus grandes valeurs de la diagonale de $\Gamma$. Cette technique revient à ne conserver que les coefficients du canal dont la puissance dépasse un seuil fixé au préalable. Il n'est pas nécessaire d'estimer entièrement $\Gamma$ mais uniquement sa diagonale, ce qui est beaucoup plus simple.
- Vecteurs associés au filtre de mise en forme décalés des retards du canal. Cette technique ne peut être mise en oeuvre qu'à condition d'avoir préalablement déterminé les retards des différents trajets du canal. Une étape de normalisation est à prévoir.

L'étape de réduction de rang peut être mise en oeuvre avant les différentes étapes du procédé selon l'invention ou encore après en fonction des cas d'application.

Le procédé selon l'invention est utilisé par exemple pour démoduler des signaux ou encore pour effectuer de la goniométrie.

## Démodulation

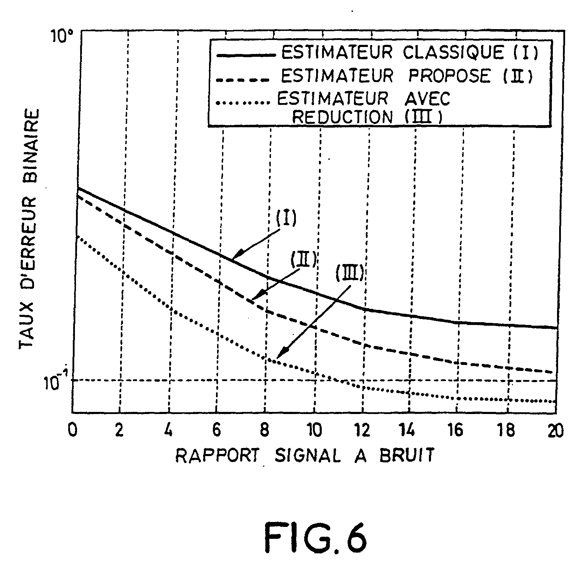

La figure 6 représente dans un diagramme taux d'erreur en fonction du rapport signal à bruit, les performances de différents estimateurs.

La courbe (I) correspond à un estimateur classique, obtenu par la méthode de corrélation, la courbe (II) une courbe obtenue en mettant en oeuvre les étapes du procédé selon l'invention et la courbe (III) les résultats obtenus en utilisant en plus une étape de réduction de rang de la matrice.

De nombreuses techniques de démodulation reposent sur la connaissance du canal de propagation. Le récepteur RAKE, par exemple, estime le symbole émis à partir de la phase de la quantité :

$$\hat{b}_0(l) = \frac{1}{N_0}\sum_{n=0}^{N_0-1}\sum_{k=0}^{L}s(lN_0+n)^*c_0(n)\mathbf{h}(k)^H\mathbf{x}(lN_0+n+k)$$

Lorsqu'on ne connaît pas le canal de propagation, ce qui est toujours le cas en pratique, on recourt à une estimée de ce canal. Sur la figure 4, les performances de notre estimateur (et de sa version à rang réduit) sont comparées à celles de l'estimateur classique pour le récepteur RAKE.

Le nouvel estimateur, et plus encore l'estimateur à rang réduit, entraînent un gain important en terme de performances.

## Goniométrie coopérative

L'invention s'applique particulièrement bien pour améliorer les mesures de goniométrie.

En effet, en goniométrie, on détermine les angles d'arrivée de différents trajets de propagation en estimant le vecteur **h** aux différents instants d'arrivée. L'estimation coopérative des temps d'arrivée et des canaux associés se fait au moyen d'une séquence d'apprentissage. Il est donc possible de l'améliorer en mettant en oeuvre le procédé selon l'invention. La précision de l'estimation des angles d'arrivée est directement liée à la qualité de l'estimation de h. Lorsque le canal estimé est bruité, l'angle mesuré se trouve dans un cône centré sur l'angle réel. Améliorer l'estimation de h permet de réduire l'écart entre l'angle mesuré et l'angle réel, ce qui améliore la résolution du traitement.

**Revendications**

1. Procédé pour estimer la réponse impulsionnelle h d'un canal de propagation dans un système comportant au moins un ou plusieurs capteurs comportant une étape d'estimation des statistiques du bruit additif résultant des interférences et du bruit thermique à partir des statistiques du signal reçu **caractérisé en ce qu'**il comporte au moins une étape d'estimation de la matrice de covariance du bruit à partir de la matrice de covariance empirique des observations $R_x$ et du nombre de chips pilotes $N_0P$ d'une séquence d'apprentissage transmise avec le signal, la matrice de covariance du bruit s'exprimant sous la forme

$$\frac{1}{N_0P}\hat{R}_x$$

où P représente le nombre de symboles d'apprentissage.

2. Procédé selon la revendication 1 **caractérisé en ce qu'**il comporte une étape d'estimation de la matrice de covariance du canal estimée sous la forme

$$\Gamma = \frac{1}{M}\sum_{m=1}^{M}\hat{\mathbf{H}}_m\hat{\mathbf{H}}_m^H - \frac{1}{N_0P}\hat{\mathbf{R}}_x$$

avec

- $\hat{\mathbf{H}}_m$ l'estimée du canal pour le slot m,

- M le nombre de slots observés pour l'estimation du canal,

- P représente le nombre de symboles d'apprentissage, et

- $N_0P$ le nombre de chips d'apprentissage, ou nombre de chips pilote.

3. Procédé selon l'une des revendications 1 à 2 **caractérisé en ce que** l'estimation de la réponse impulsionnelle du canal de propagation utilise une méthode de Wiener et **en ce que** la réponse impulsionnelle du canal est égale à

$$\tilde{\mathbf{H}}_m = [\frac{1}{M}\sum_{m=1}^{M}\hat{\mathbf{H}}_m\hat{\mathbf{H}}_m^H - \frac{1}{N_0P}\hat{\mathbf{R}}_x]\Delta^{-1}\hat{\mathbf{H}}_m$$

où

- $\Delta$ représente la matrice de covariance du canal estimé : $\Delta = E[\hat{\mathbf{H}}_m\hat{\mathbf{H}}_m^H]$

- $\hat{\mathbf{H}}_m$ l'estimée du canal pour le slot m,

- M le nombre de slots observés pour l'estimation du canal,

- P représente le nombre de symboles d'apprentissage, et

- $N_0P$ le nombre de chips d'apprentissage, ou nombre de chips pilote.

**4.** Procédé selon l'une des revendications 1 à 3 **caractérisé en ce qu'**il comporte une étape où l'espace-canal est paramétré à l'aide d'une base orthonormale constituée d'un nombre de vecteurs donné $u_1$, $u_2$,...$u_p$.

**5.** Procédé selon la revendication 4 **caractérisé en ce que** les vecteurs $u_1$, $u_2$, ..., $u_p$ correspondent aux vecteurs propres associés aux plus grandes valeurs propres de la matrice estimée $\Gamma$.

**6.** Procédé selon la revendication 4 **caractérisé en ce que** les vecteurs $u_1$, $u_2$, ..., $u_p$ sont des vecteurs canoniques associés aux positions des plus grandes valeurs de la diagonale de la matrice $\Gamma$.

**7.** Procédé selon la revendication 4 **caractérisé en ce que** les vecteurs $u_1$, $u_2$, ..., $u_p$ sont formés à partir de versions échantillonnées du filtre de mise en forme, décalées des retards de propagation du canal, estimés au préalable, et normalisées.

**8.** Procédé selon l'une des revendications 1 à 7 pour estimer la réponse impulsionnelle d'un canal de propagation dans le domaine de l'UMTS pour des liaisons montantes et/ou des liaisons descendantes entre une station de base et un ou plusieurs mobiles.

**9.** Dispositif de réception adapté pour estimer la réponse impulsionnelle d'un canal de propagation comportant un ou plusieurs capteurs de réception d'un signal, un moyen pour échantillonner le signal reçu, un moyen adapté à estimer le bruit à partir des statistiques du canal **caractérisé en ce que** le récepteur comporte au moins un moyen adapté à estimer la matrice de covariance du bruit à partir de la matrice de covariance empirique des observations $\mathbf{R}_x$ et du nombre de chips pilote $\mathbf{N_0P}$ d'une séquence d'apprentissage transmise avec le signal, la matrice de covariance du bruit s'exprimant sous la forme

$$\frac{1}{N_0P}\hat{R}_x$$

où P représente le nombre de symboles d'apprentissage.

**10.** Récepteur selon la revendication 9 **caractérisé en ce qu'**il comporte un moyen adapté à déterminer la réponse impulsionnelle du canal sous la forme

$$\widetilde{\mathbf{H}}_m =[\ \frac{1}{M}\sum_{m=1}^{M}\hat{\mathbf{H}}_m\hat{\mathbf{H}}_m^H -\ \frac{1}{N_0P}\hat{\mathbf{R}}_x\ ]\Delta^{-1}\hat{\mathbf{H}}_m$$

où

$\Delta$ représente la matrice de covariance du canal estimé : $\Delta = E[\hat{\mathbf{H}}_m\hat{\mathbf{H}}_m^H]$

$\hat{\mathbf{H}}_m$ l'estimée du canal pour le slot m,

M le nombre de slots observés pour l'estimation du canal

P représente le nombre de symboles d'apprentissage, et

$N_0P$ le nombre de chips d'apprentissage, ou nombre de chips pilote.

**11.** Récepteur selon la revendication 10 appliqué dans le domaine de l'UMTS.

**Claims**

**1.** Method for estimating the impulse response h of a propagation channel in a system comprising at least one or more sensors comprising a step of estimating the statistics of the additive noise resulting from the interference and from the thermal noise on the basis of statistics of the signal received, **characterized in that** it comprises at least one step of estimating the covariance matrix of the noise on the basis of the empirical covariance matrix of the observations $R_x$ and of the number of pilot chips $N_0P$ of a learning sequence transmitted with the signal, the covariance matrix of the noise being expressed in the form

$$\frac{1}{N_0P}\hat{R}_x$$

where P represents the number of learning symbols.

2. Method according to Claim 1, **characterized in that** it comprises a step of estimating the channel covariance matrix estimated in the form

$$\Gamma = \frac{1}{M}\sum_{m=1}^{M}\hat{H}_m\hat{H}_m^H - \frac{1}{N_0P}\hat{R}_x$$

with

- $\hat{H}_m$ the estimate of the channel for slot m,
- M the number of slots observed for the estimation of the channel,
- P represents the number of learning symbols, and
- $N_0P$ the number of learning chips, or number of pilot chips.

3. Method according to one of Claims 1 to 2, **characterized in that** the estimation of the impulse response of the propagation channel uses a Wiener procedure and **in that** the impulse response of the channel is equal to

$$\tilde{H}_m = [\frac{1}{M}\sum_{m=1}^{M}\hat{H}_m\hat{H}_m^H - \frac{1}{N_0P}\hat{R}_x]\Delta^{-1}\hat{H}_m$$

where

- $\Delta$ represents the covariance matrix of the estimated channel: $\Delta=E[\hat{H}_m\hat{H}_m^H]$
- $H_m$ the estimate of the channel for slot m,
- M the number of slots observed for the estimation of the channel,
- P represents the number of learning symbols, and
- $N_0P$ the number of learning chips, or number of pilot chips.

4. Method according to one of Claims 1 to 3, **characterized in that** it comprises a step where the channel space is parameterized with the aid of an orthonormal base consisting of a given number of vectors $u_1, u_2, ...u_p$.

5. Method according to Claim 4, **characterized in that** the vectors $u_1, u_2, ...u_p$ correspond to the eigenvectors associated with the largest eigenvalues of the estimated matrix $\Gamma$.

6. Method according to Claim 4, **characterized in that** the vectors $u_1, u_2, ...u_p$ are canonical vectors associated with the positions of the largest values of the diagonal of the matrix $\Gamma$.

7. Method according to Claim 4, **characterized in that** the vectors $u_1, u_2, ...u_p$ are formed on the basis of sampled versions of the shaping filter, that are shifted by the previously estimated propagation delays of the channel, and are normalized.

8. Method according to one of Claims 1 to 7, for estimating the impulse response of a propagation channel in the UMTS field for uplinks and/or downlinks between a base station and one or more mobiles.

9. Reception device adapted for estimating the impulse response of a propagation channel comprising one or more signal reception sensors, a means for sampling the signal received, a means adapted for estimating the noise on the basis of the statistics of the channel, **characterized in that** the receiver comprises at least one means adapted for estimating the covariance matrix of the noise on the basis of the empirical covariance matrix of the observations $R_x$ and of the number of pilot chips $N_0P$ of a learning sequence transmitted with the signal, the covariance matrix of the noise being expressed in the form

$$\frac{1}{N_0P}\hat{R}_x$$

where P represents the number of learning symbols.

10. Receiver according to Claim 9, **characterized in that** it comprises a means adapted for determining the impulse response of the channel in the form

$$\tilde{H}_m = [\; \frac{1}{M}\sum_{m=1}^{M}\hat{H}_m\hat{H}_m^H \cdot \; \frac{1}{N_0P}\hat{R}_x ]\Delta^{-1}\hat{H}_m$$

where

- $\Delta$ represents the covariance matrix of the estimated channel : $\Delta = E[\hat{H}_m\hat{H}_m^H]$
- $H_m$ the estimate of the channel for slot m,
- M the number of slots observed for the estimation of the channel,
- P represents the number of learning symbols, and
- $N_0P$ the number of learning chips, or number of pilot chips.

11. Receiver according to Claim 10, applied in the UMTS field.

**Patentansprüche**

1. Verfahren zum Schätzen der Impulsantwort h eines Übertragungskanals in einem System mit zumindest einem oder mehreren Aufnehmern mit einer Stufe des Schätzens von Statistiken des zusätzlichen Rauschens, das aus Interferenzen resultiert, und des thermischen Rauschens auf der Basis von Statistiken des empfangenen Signals, **dadurch gekennzeichnet, dass** es zumindest eine Stufe des Schätzens der Kovarianzmatrix des Rauschens auf der Basis der empirischen Kovarianzmatrix $R_x$ der Beobachtungen und $N_0P$ Zahl der Treiberchips einer Lernsequenz umfasst, die mit einem Signal übertragen wird, wobei die Kovarianzmatrix des Rauschens sich in der Form

$$\frac{1}{N_0P}\hat{R}_x$$

ausdrückt, wobei P die Zahl der Lernsymbole angibt.

2. Verfahren nach Anspruch 1, **dadurch gekennzeichnet, dass** es eine Stufe des Schätzens der Kovarianzmatrix des geschätzten Kanals in der Form

$$\bar{\Gamma} = \frac{1}{M}\sum_{m=1}^{M}\hat{H}_m\hat{H}_m^H - \frac{1}{N_0P}\hat{R}_x$$

umfasst, wobei

$\hat{H}_m$ die Schätzung des Kanals für den Schlitz m ist,
M die Zahl der für die Schätzung des Kanals beobachteten Schlitze ist,
P die Zahl der Lernsymbole darstellt, und
$N_0P$ die Zahl der Lernchips oder die Zahl der Treiberchips ist.

3. Verfahren nach einem der Ansprüche 1 bis 2, **dadurch gekennzeichnet, dass** die Schätzung der Impulsantwort des Übertragungskanals ein Wiener-Verfahren nutzt und dass die Impulsantwort des Kanals gleich

$$\tilde{H}_m = [\frac{1}{M} \sum_{m=1}^{M} \hat{H}_m \hat{H}_m^H - \frac{1}{N_0P} \hat{R}_x]\Delta^{-1}\hat{H}_m$$

ist, wobei
$\Delta$ die Kovarianzmatrix des geschätzten Kanals darstellt:

$$\Delta = E[\hat{H}_m \hat{H}_m^H],$$

$\hat{H}_m$ die Schätzung des Kanals für den Schlitz m ist,
M die Zahl der für die Schätzung des Kanals beobachteten Schlitze ist,
P die Zahl der Lernsymbole darstellt, und $N_0P$ die Zahl der Lernchips oder die Zahl der Treiberchips ist.

4. Verfahren nach einem der Ansprüche 1 bis 3, **dadurch gekennzeichnet, dass** es einen Schritt umfasst, in dem der Kanalraum mittels einer Orthonormalbasis parametrisiert wird, die aus einer Anzahl gegebener Vektoren $u_1$, $u_2$ , ... $u_p$ besteht.

5. Verfahren nach Anspruch 4, **dadurch gekennzeichnet, dass** die Vektoren $u_1$, $u_2$, ...$u_p$ den Eigenvektoren entsprechen, die den größten Eigenwerten der geschätzten Matrix $\Gamma$ zugeordnet sind.

6. Verfahren nach Anspruch 4, **dadurch gekennzeichnet, dass** die Vektoren $u_1$, $u_2$, ...$u_p$ kanonische Vektoren sind, die mit den Positionen der größten Werte der Diagonalen der Matrix $\Gamma$ verknüpft sind.

7. Verfahren nach Anspruch 4, **dadurch gekennzeichnet, dass** die Vektoren $u_1$, $u_2$, ...$u_p$ auf der Basis von abgetasteten Versionen des Formungsfilters gebildet werden, die um zuvor geschätzte Übertragungsverzögerungen des Kanals verschoben und normiert sind.

8. Verfahren nach einem der Ansprüche 1 bis 7 zum Schätzen der Inpulsantwort eines Übertragungskanals im UMTS-Bereich für Aufwärtsverbindungen und/oder Abwärtsverbindungen zwischen einer Basisstation und einer oder mehreren Mobilstationen.

9. Empfangsvorrichtung, die dafür ausgelegt ist, die Impulsantwort eines Übertragungskanals zu schätzen, mit einem oder mehreren Aufnehmern zum Empfang eines Signals, einem Mittel zum Abtasten des empfangenen Signals, einem Mittel, das dafür ausgelegt ist, das Rauschen auf der Basis von Statistiken des Kanals zu schätzen, **dadurch gekennzeichnet, dass** der Empfänger zumindest ein Mittel umfasst, das dafür ausgelegt ist, die Kovarianzmatrix des Rauschens auf der Basis der empirischen Kovarianzmatrix $R_x$ der Beobachtungen und der Zahl $N_0P$ der Treiberchips einer mit einem Signal übertragenen Lernsequenz zu schätzen, wobei die Kovarianzmatrix des Rauschens sich in der Form

$$\frac{1}{N_0P}\hat{R}_x$$

ausdrückt, wobei P die Zahl der Lernsymbole angibt.

10. Empfänger nach Anspruch 9, **dadurch gekennzeichnet, dass** er ein Mittel enthält, das dafür ausgelegt ist, die Impulsantwort des Kanals in der Form

$$\tilde{H}_m = [\frac{1}{M}\sum_{m=1}^{M}\hat{H}_m\hat{H}_m^H - \frac{1}{N_0P}\hat{R}_x]\Delta^{-1}\hat{H}_m$$

zu bestimmen, wobei
$\Delta$ die Kovarianzmatrix des geschätzten Kanals darstellt:

$$\Delta = E[\hat{H}_m\hat{H}_m^H],$$

$\hat{H}_m$ die Schätzung des Kanals für den Schlitz m ist,
M die Zahl der für die Schätzung des Kanals beobachteten Schlitze ist,
P die Zahl der Lernsymbole darstellt, und
$N_0P$ die Zahl der Lernchips oder die Zahl der Treiberchips ist.

11. Empfänger nach Anspruch 10, der im UMTS-Bereich angewendet wird.

| TRAME N°1 | TRAME N°2 | TRAME N°3 | TRAME N°4 | TRAME N°5 |
|---|---|---|---|---|

1 TRAME = 15 SLOTS = 10ms

| SLOT N°1 | SLOT N°2 | SLOT N°3 | • • • | SLOT N°15 |
|---|---|---|---|---|

## FIG.1

SYMBOLES  PUISSANCES  ETALEMENT (SPREADING)  EMBROUILLAGE (SCRAMBLING)

$u_0$  $c_0$

UTILISATEUR 0

$u_1$  $c_1$

UTILISATEUR 1

$u_0$  $c_Q$

UTILISATEUR Q

$s(n)$

FILTRE D'EMISSION

INFORMATIONS ET DONNEES

SEQUENCE D'APPRENTISSAGE

## FIG.2

SYMBOLES    PHASE OU    ETALEMENT    EMBROUILLAGE
            QUADRATURE  (SPREADING)  (SCRAMBLING)

FIG.3

RECEPTION ET
ECHANTILLONNAGE
DU SIGNAL MULTI-
CAPTEURS

STOCKAGE DES
VECTEURS
D'OBSERVATION
SUCCESSIFS

ESTIMATION DU CANAL
PAR CORRELATION DU
SIGNAL AVEC LA
SEQUENCE
D'APPRENTISSAGE

ESTIMATION DE
LA MATRICE $\hat{R}_x$

STOCKAGE DES
ESTIMEES SUCCESSIVES
DU CANAL

ESTIMATION DE
LA MATRICE $\Delta$

ESTIMATION DE
LA MATRICE $\Gamma$ PAR

$$\hat{\Gamma} = \hat{\Delta} - \frac{1}{NP} \hat{R}_x$$

AMELIORATION DES
ESTIMEES DU CANAL
PAR:

$$\hat{\Gamma} \hat{\Delta}^{-1} \hat{H}$$

# FIG.4

RECEPTION ET
ECHANTILLONNAGE
DU SIGNAL

↓

ESTIMATION DU
CANAL

↓

ESTIMATION DES
PARAMETRES DU CANAL
(TEMPS D'ARRIVEE,
PUISSANCES DES TRAJETS,
OU COVARIANCE $\Gamma$ )

↓

CONSTRUCTION DE
LA MATRICE $U$
DE REDUCTION

↓

REDUCTION DES
OBSERVATIONS ET DES
ESTIMEES DU CANAL

↓

ESTIMATION DE
WIENER DU CANAL
REDUIT

# FIG.5

FIG.6